(19) Europäisches Patentamt
European Patent Office
Office européen des brevets

(11) **EP 4 410 599 A1**

(12) **EUROPEAN PATENT APPLICATION**
published in accordance with Art. 153(4) EPC

(43) Date of publication:
**07.08.2024 Bulletin 2024/32**

(21) Application number: **22874871.1**

(22) Date of filing: **27.09.2022**

(51) International Patent Classification (IPC):
**B60R 1/06** $^{(2006.01)}$ **H04N 23/00** $^{(2023.01)}$

(52) Cooperative Patent Classification (CPC):
**B60R 1/06; B60R 1/12**

(86) International application number:
**PCT/CN2022/121534**

(87) International publication number:
**WO 2023/051486 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2021 CN 202122360709 U**

(71) Applicant: **Shanghai Kem Vision Technology Co.**
**Shanghai 201702 (CN)**

(72) Inventor: **FU, Bingkai**
**Shanghai 201702 (CN)**

(74) Representative: **Franke, Dirk**
**Franke & Partner**
**Patent- und Rechtsanwälte**
**Widenmayerstraße 25**
**80538 München (DE)**

(54) **VEHICLE-MOUNTED CAMERA SYSTEM**

(57) The present application discloses a vehicle-mounted camera system for mounting on a target vehicle. The vehicle-mounted camera system comprises an image acquisition unit and a camera lens. A predetermined included angle is formed between the plane where the image acquisition unit is located and the main plane of the camera lens, so that the plane where the image acquisition unit is located intersects with the main plane of the camera lens at a preset distance h at the side of the vehicle body; moreover, the camera lens is focused behind the side of the target vehicle, and the horizontal distance from an object focal point F of the camera lens to the plane where the side of the target vehicle body is located equals to the preset distance or approaches the preset distance h. In the present application, the angle deflection between the image acquisition unit and the camera lens is preset, and the deflection is fixed in the camera by means of the processing of a housing mounting position, so that a scene with a larger depth of field of the side of the vehicle can be clearly photographed, and a better field of view is provided for a driver, thereby facilitating him to make an accurate determination by the driver.

Figure 4

EP 4 410 599 A1

## Description

Related Application

This application claims the priority of Chinese patent application No. 202122360709.0, entitled with "Vehicle-mounted Camera System", filed on September 28, 2021.

Field of the Invention

The present application relates to the field of optoelectronics, and in particular to a camera system mounted to a vehicle assisting a driver to drive.

Background

A rear-view mirror is a tool for a driver to directly acquire external information about such as rear, side, and underneath parts of a vehicle, while sitting on a driver's seat in a cab. Traditional rear-view mirrors are all based on the optical principle, through a curvature design of the rear-view mirror, a purpose of expanding the field of view of the rear-view mirror is achieved as much as possible.

With the development of electronic camera technology, more and more vehicle rear-view mirrors are added with auxiliary camera devices, and a scene photographed by the camera through the rear camera or other cameras is displayed to the driver via a screen to improve the field of view observed by the driver and the clarity of the field of view.

However, the optical-based camera devices all have a certain depth of field and perspective angle; therefore, in the scene that can be photographed by the camera devices, only the portion that in the depth of field is clear, while the scenes within other distance ranges are blurred. Furthermore, the mounting position will change the perspective of the image, which will affect the observation and judgment of the driver, even lead to misjudgment of the driver and affect the driving safety.

It is inevitable for traditional camera lenses to have excellent center image quality and relatively poor edge image quality. For the commonly used vehicle-mounted cameras, an axis of the lens coincides with the center of a sensor to ensure the optimal picture quality in the central area of a picture. However, the electronic rear-view mirror camera is different from the traditional image in working manner, the picture in the electronic rear-view mirror camera needs to move up and down and left and right along with the vehicle driving posture, the clear part of the picture is not at the central part of the image, and central part of the image needs to offset from the clear part to taking all factors into consideration for both a general scene and temporary scene pictures. If the lens is designed to offset from the definition center, the cost is high, and the production yield rate and cost are uncontrollable.

The present invention solves the problems of picture definition offset, perspective and distortion, etc. by forming an included angle between an optical axis of a rear focal plane of the lens and a sensor surface and/or forming an a parallel offset between an optical axis of a rear focal plane of the lens and a sensor surface, and forming a certain inclined included angle offset.

Summary

In view of the above-mentioned problems, the present application aims to provide a vehicle-mounted camera system with a large depth of field, a large clear range and achivinging a high definition at a perspective angle, which can clearly photograph a real-time scene in a target area behind the vehicle, and is more consistent with human eye visual observation habits, thereby providing a better field of view for a driver, and being more conducive to the driver making an accurate judgement.
Specifically, the present application provides a vehicle-mounted camera system for mounting in a target vehicle, wherein the vehicle-mounted camera system includes an image acquisition unit and a camera lens and is mounted on sides of the target vehicle; a preset included angle is formed between the plane where the image acquisition unit is located and the main plane of the camera lens, so that the plane where the image acquisition unit is located intersects with the main plane of the camera lens at a preset distance h from side of a vehicle body; moreover, the camera lens is focused behind the side of the target vehicle, and the horizontal distance between an object focal point F of the camera lens and the plane where the side of the target vehicle's body is located equal to a preset distance or approaches the preset distance h. The included angle and the object focal point are provided as such, that a clear focal plane of the camera lens according to a Scheimpflug principle is located at a preset distance h from the side of the vehicle body and substantially parallel to the vehicle body.
Preferably, the preset distance h satisfies the following formula:
$$h = h_1 + h_2 = h_1 + \frac{f}{\tan\alpha}$$
, where $h_1$ represents a extended distance of the center of the camera lens from the side of the vehicle body of the target vehicle when the camera lens is mounted on the target vehicle, $h_2$ represents a distance between an intersection line of a plane and the center of the camera lens, which intersection line is a line where the image acquisition unit is located intersects with the main plane of the camera lens, and $f$ represents a focal length of the camera lens.

Preferably, a longitudinal distance L between an object focal point F of the camera lens and an intersection line of the plane where the image acquisition unit is located intersected with the main plane of the camera lens satisfies the following formula:

$$L = \frac{h_2}{\tan \alpha}.$$

Preferably, the plane where the image acquisition unit is located and/or the main plane of the camera lens are subjected to angle deflection to the left or to the right with respect to a main axis of the vehicle-mounted camera system.

Preferably, a perpendicular line is drawed from a center of the camera lens to an intersection line between the plane where the image acquisition unit is located and the main plane of the camera lens, a height of an intersection point of the perpendicular line and the intersection line is equal to or lower than a height of the center of the camera lens, and a height of the object focal point of the camera lens on a side of the target vehicle is equal to or lower than the height of the intersection point of the perpendicular line and the intersection line.

Preferably, a center of the image acquisition unit and/or an axial center of the camera lens is laterally translated with respect to the center of the vehicle-mounted camera system, and a translation distance is determined based on an image shift caused by an included angle between the plane where the image acquisition unit is located and/or the main plane of the camera lens.

Preferably, the vehicle-mounted camera system further includes a housing, the image acquisition unit is mounted on a rear side of the housing, and the camera lens is mounted in front of the image acquisition unit.

Further preferably, the housing further includes a first mounting position for mounting the camera lens and a second mounting position for mounting the image acquisition unit, wherein at least one of the first mounting position and the second mounting position being offset with respect to a main axis of the vehicle-mounted camera system so that deflection of a preset angle and/or translation of a preset distance occur after the camera lens and the image acquisition unit are fixed at respective positions.

Preferably, the preset included angle is between 0.1 and 10 degrees. The preset included angle may be either positive or negative, i.e., the direction of the included angle is not defined here.

Preferably, the preset included angle is 1 degree, 2 degrees, 3 degrees, 5 degrees or 7 degrees.

Preferably, the vehicle-mounted camera system includes a plurality of sets of imaging structures composed of the image acquisition unit, the camera lens and the housing, which are mounted on both sides of the vehicle respectively.

The vehicle-mounted camera system of the present application may include two sets of sensors and camera lenses and a housing for fixing the two, which are respectively mounted on two sides of the vehicle.

The "angle deflection" in the vehicle-mounted camera system of the present application refers to angles of a mounting main axis of the camera lens and the sensor relative to the camera system housing, but the core aim thereof is to achieve a relative included angle between the the camera lens and the sensor, so that a clear focusing plane of the imaging lens is located at a side of a vehicle body and is substantially parallel to the side of the vehicle body by means of the included angle and the setting of the focusing position (i.e., an object focal point F), and the focal plane of the camera lens, the plane where the image acquisition unit is located and the plane where the camera lens is located substantially satisfy the Scheimpflug principle. The "position translation" in the vehicle-mounted camera system of the present application also refers to parallel shift of the mounting main axis of the camera lens center and the sensor center relative to the camera system housing; however, the major purpose thereof is also to achieve a relative position offset between the camera lens center and the sensor center. In use of the solution of the present application, the data can also be calculated in advance according to the vehicle type, the mounting height of the camera, the field of view required by laws and regulations, and the acquisition range required by the design solution, and the field of view is adjusted by the translation of the sensor.

Techncal Effects

The camera system of the present application can provide a clearer image behind the side of the vehicle in a wider range, and the camera system of the present application differs from the axis-shifting design of a conventional camera in that it does not have a soft-connected leather cavity, does not have a complicated axis-shifting adjustment apparatus, and does not have an operation of adjusting the axis-shifting relationship and angle in use. The deflection angle between the image acquisition unit and the lens of the present application is determined in advance and then fixed by machining the housing or the mounting position, and it is precisely because there is no post-adjustment of the angle and would not cause any problems such as deflection and decreased accuracy due to shock in driving the vehicle. Therefore, the camera system of the present application is simpler and more convenient to use, and only needs to select a corresponding model for mounting according to a vehicle model, and a clear camera image required by the corresponding vehicle model can be obtained.

In addition, a field of view of lenses in most of the traditional camera with moved axis is greater than a photosensitive area of the sensor, so that the sensor can obtain better image quality during the movement; however, the present application is designed based on data in the early stage and then used as fixed manufacturing data to obtain optimal image quality in limited product performance and effectively reduce material costs.

The present application successfully introduces the principle of axis-shifting camera to the field of vehicle-mounted camera, which does not require a user to adjust the direction and angle of translation or deflection according to the requirements of a target scene during using, and also does not require a user to have a good photographic basis and rich photographic experience.

Brief Desription of Drawings

FIG. 1 is a schematic structural diagram illustrating a common camera;
FIG. 2 is a schematic structural diagram illustrating a camera of a vehicle-mounted camera system in Embodiment 1 according to the present application;
FIG. 3 is a schematic projection view of a positional relationship of each part in a horizontal plane when the camera system is mounted on a side of a vehicle in Embodiment 1;
FIG. 4 is a simplified and enlarged schematic structural diagram illustrating a camera in Embodiment 1;
FIG. 5 is a schematic structural diagram illustrating a camera of a vehicle-mounted camera system in Embodiment 2 according to the present application;
FIG. 6 is a simplified and enlarged schematic structural diagram illustrating a camera in Embodiment 2 according to the present application;
FIG. 7 is a schematic structural diagram illustrating a camera of a vehicle-mounted camera system in Embodiment 3 according to the present application;
FIG. 8 is a simplified and enlarged schematic structural diagram illustrating a camera in Embodiment 3 according to the present application;
FIGS. 9-10 show schematic structural diagrams of cameras of two further different variants of the embodiments according to the present application, respectively.

Detailed Description of Embodiments

The present application is described in further detail below with reference to examples and figures, but the embodiments of the present application are not limited thereto.

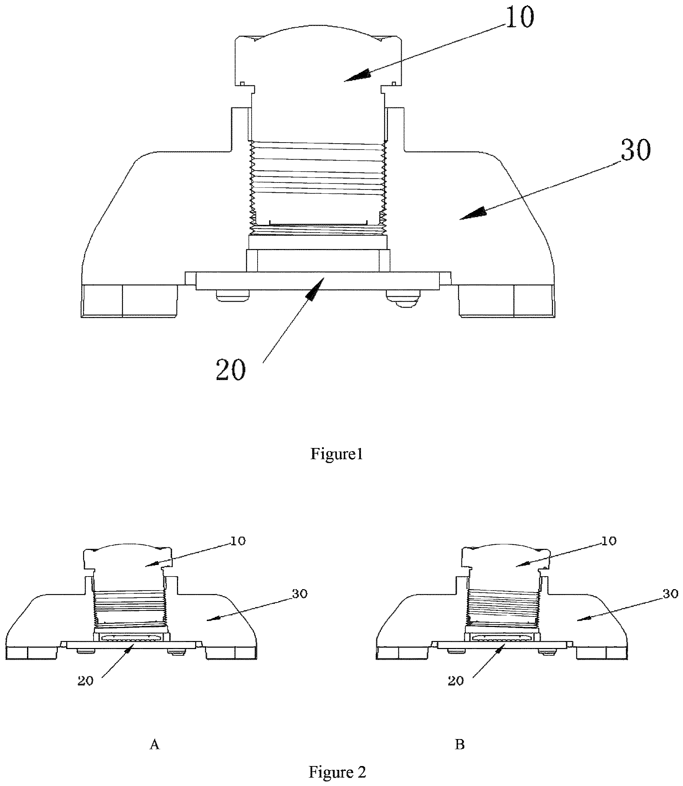

FIG. 1 is a schematic structural diagram illustrating a common camera, where a camera lens 10 is mounted on a front housing 30 of a camera system, a sensor 20 is mounted on a mounting base behind the camera lens 10, the camera lens 10 and an image acquisition unit are arranged coaxially, and the main planes where they are located are parallel. In the embodiments described below, the image acquisition units each employ an image sensor 20.

Embodiment 1

In contrast, as shown in FIG. 2, in the present embodiment, a deflection arrangement is used, in which the camera lens deflects to the left (FIG. 2A) or the camera lens deflects to the right (FIG. 2B). Similar to a common camera, the camera lens 10 is mounted on the front housing 30 of the camera system, and the image sensor 20 is mounted on the mounting base behind the camera lens 10, except that in the present embodiment the main plane of the camera lens 10 (the plane perpendicular to the main axis) is deflected with respect to the main axis of the camera and with respect to the main plane of the sensor 20.

Part A in FIG. 2 shows the use of the left deflection of the camera lens, where the main axis of the camera lens 10 is deflected to the left with respect to the normal direction of the plane where the sensor 20 is located (i.e., the main axis direction of the camera system), and the deflection angle is $\alpha°$, in other words, the main plane where the camera lens 10 is located forms an included angle of $\alpha°$ with the plane where the sensor is located; Part B in FIG. 2 shows the use of the right deflection of the camera lens, where the main axis of the camera lens 10 is deflected to the right with respect to the normal direction of the plane where the sensor is located, and the deflection angle is $\alpha°$.

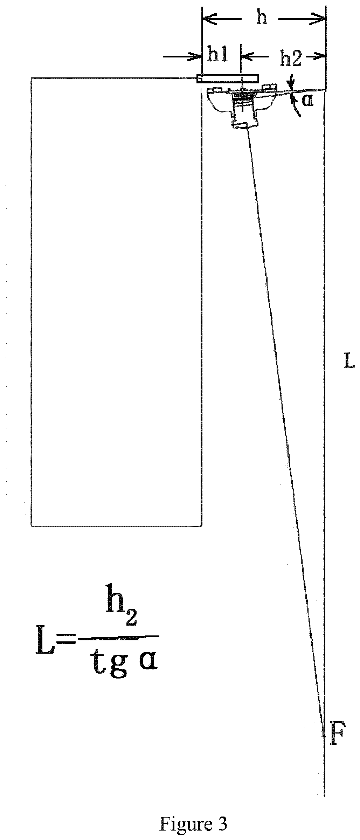

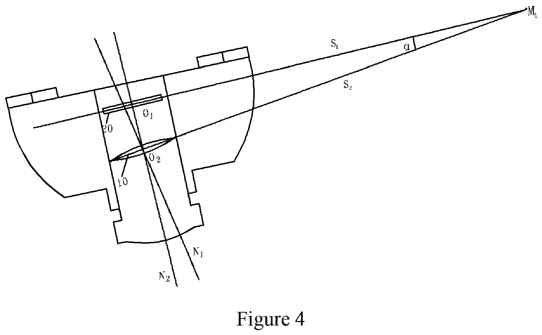

FIG. 3 is a schematic diagram illustrating a positional relationship when the structure in Embodiment 1 (in the variant shown in A part of FIG. 2) is reversely mounted (the lens of the camera system is directed toward the rear of the vehicle body) to the side of the vehicle body. FIG. 4 shows a simplified and enlarged schematic structural diagram illustrating the camera system of the present embodiment. As shown in the figure, in the present embodiment, the vehicle-mounted camera system is mounted on right side of the target vehicle, and a preset included angle $\alpha$ is provided between the plane $S_1$ where the image sensor 20 is located and the main plane $S_2$ of the camera lens 10, in other words, the normal direction $N_1$ of the camera lens 10 is deflected with respect to the normal direction $N_2$ of the image sensor, and the main axis of the camera coincides with the normal direction $N_2$ of the image sensor, so that a preset included angle $\alpha$ is provided between the normal direction $N_1$ of the camera lens 10 and the main axis of the camera. In this way, an extension line of the plane $S_1$ where the image sensor 20 is located and the main plane $S_2$ of the camera lens 10 intersect at a preset distance h from the side of the vehicle body, and the intersection point (in fact, an intersection line) is $M_1$ in the figure. In the present embodiment, the image sensor 20 is normally mounted in the camera, and the normal direction of the image sensor 20 coincides with the main axis of the camera, which is indicated by $N_2$ in the figure. The preset included angle $\alpha$ is in a range of 0.1-10 degrees, and the preset included angle and the preset distance h can be determined according to the model of the vehicle, the focal length of the lens of the vehicle-mounted camera system and the required field of view of the vehicle.

In the figure, the center of the image sensor 20 and the center of the camera lens 10 are indicated by $O_1$ and $O_2$, respectively.

Preferably, the preset distance h satisfies the

$$h = h_1 + h_2 = h_1 + \frac{f}{\tan \alpha}$$

following formula:

wherein, as shown in FIG. 3, $h_1$ represents a extended distance of the center of the camera lens 10 relative to the side of the vehicle body (compartment wall) of the target vehicle when the camera lens 10 is mounted on the vehicle, $h_2$ represents a distance from the intersection line $M_1$ of the plane $S_1$ where the image sensor 20 is located and the main plane $S_2$ of the camera lens 10 to the center of the camera lens 10, $f$ represents the focal length of the camera lens, i.e., the distance from the focal point F to the center of the camera lens, and $\alpha$ represents a preset included angle between the plane where the image sensor is located and the main plane of the camera lens.

In order to satisfy the Scheimpflug principle, the focusing position of the camera lens 10 is adjusted so that the camera lens 10 is focused behind the side part of the target vehicle, and the horizontal distance between the focal point of the camera lens 10 and the plane of the sidewall of the vehicle body of the target vehicle is at or near the preset distance h.

More preferably, the longitudinal distance L from the object focal point F of the camera lens 10 to the intersection line of the plane where the image sensor is located and the main plane of the camera lens 10 satisfies the following formula:

$$L = \frac{h_2}{\tan \alpha}.$$

In this way, since the focusing position of the camera lens 10 is located on a parallel line parallel to the side of the vehicle body and at a horizontal distance h from the side of the vehicle body, on the plane where the main axis of the camera lens 10 is located, a connecting line between the focal point F of the camera lens 10 and the intersection line $M_1$ of the plane $S_2$ where the camera lens is located and the plane $S_1$ where the image sensor is located is parallel to the side of the vehicle body, according to the Scheimpflug principle, a clear focal plane of the camera lens 10 is parallel to the side of the vehicle body (generally along the direction L in the figure), and a clearer image of the rear of the vehicle body can be provided. The horizontal orientation of the camera lens 10 of the camera lens 10 are descrbied herein. Regarding the pitch/elevating angle of the camera lens 10, it can be adjusted by a person skilled in the art according to the height of the vehicle body.

According to the vehicle type, camera mounting height, the field of view required by laws and regulations, and the image acquisition range required by the design solution, the values of L and h can be determined, and then the deflection angle and the focal length of the camera lens can be set. The mounting position of the image sensor and the camera lens is processed and adjusted directly in the front housing, so that the required deflection angle can be formed after the camera lens and the image sensor are mounted in its mounting position thereof, thereby avoiding the degradation of photographing quality due to vibration and other reasons during the use of the camera system, and expanding the field of view capable of clear camera shooting.

In a preferred implementation, the deflection angle of the camera lens 10 or the image sensor 20 is between 0.1 degrees and 15 degrees, such as 0.3 degrees, 1 degree, 3 degrees, 5 degrees, 7 degrees, 9 degrees or 10 degrees.

In the present embodiment, the arrangement of the right-side rear-view mirror is as shown in FIG. 3, and it will be understood by a person skilled in the art that the rear-view mirror on the other side can be arranged and adjusted in such a way that it is axisymmetric with this side.

In the present embodiment, the description is made by taking the case where the plane $S_1$ in which the image sensor 20 is located and the main plane $S_2$ of the camera lens 10 are intersected at the side of the vehicle body and the intersection line thereof is substantially along the vertical direction as example. That is, in this case, the image sensor 20 is offset from the main plane of the camera lens 10 only in the horizontal direction to form an included angle.

A person skilled in the art would understand that the rear-view mirrors of some large vehicles need to have a certain downward inclination angle, and at this time, the image sensor 20 and the camera lens 10 can be further arranged so that there is a certain included angle therebetween in the vertical direction, and the intersection line of the image sensor 20 and the camera lens 10 is offset downward, i.e., the intersection line of the two is not in the vertical direction, but in an inclined direction. In this condition, it is required that: if a perpendicular line from the center of the camera lens to an intersection line of the plane where the image sensor is located and the main plane of the camera lens is drawn, a height of an intersection point of the perpendicular line and the intersection line is lower than a height of the center of the camera lens, and at the same time, the height of the object focal point of the camera lens on the side of the target vehicle is set to be equal to or lower than the height of the intersection point of the perpendicular line and the intersection line.

Such arrangement of the included angle and the object focal point induces that a clear focal plane of the camera lens according to the Scheimpflug principle is located at a preset distance from the side of the vehicle body and is substantially parallel to the side of the vehicle body but slightly inclined downwards.

Embodiment 2

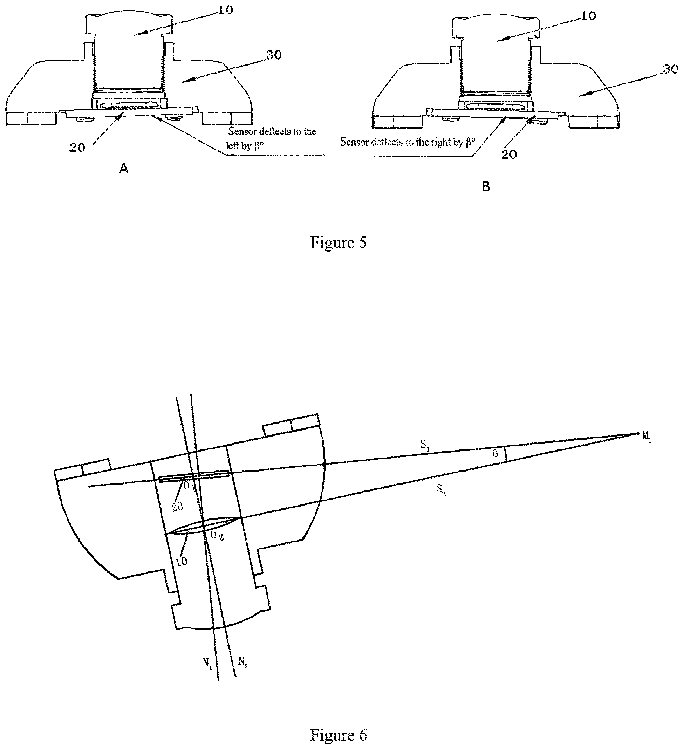

The arrangement of the sensor and the camera lens in the present embodiment is shown in FIG. 5. A sensor deflection solution is used in the present embodiment.

As shown in FIG. 5, part A shows a condition of left deflection of the sensor. The normal direction of the sensor is deflected to the left with respect to the main axis direction of the camera lens, and the deflection angle is $\beta°$. Part B in FIG. 5 shows a condition of the right deflection of the sensor. The normal direction of the sensor is deflected to the right with respect to the main axis direction of the camera lens, and the deflection angle is $\beta°$. When the camera in FIG. 5 is mounted to a vehicle, it should be mounted reversed, i.e., the camera lens is directed towards the rear of the vehicle body.

FIG. 6 is a simplified and enlarged schematic diagram illustrating the camera of B part in FIG. 5, the camera with the sensor deflected to the right, in which the angle of the camera is the same as that of Embodiment 1, both of which are mounted to the right side of the vehicle and are photographed rearward.

As shown in FIG. 6, a preset included angle $\beta$ is provided between the plane $S_1$ where the image sensor is located and the main plane $S_2$ of the camera lens, in other words, the normal direction $N_1$ of the image sensor 20 is deflected with respect to the normal direction $N_2$ of the camera lens 10, and the camera lens 10 is normally mounted in the camera (the normal direction of the camera lens 10 coincides with the main axis of the camera, and the $N_2$ direction in the figure), so that a preset included angle $\beta$ is provided between the normal direction $N_1$ of the image sensor 20 and the main axis of the camera, and in this way, extension of the plane $S_1$ where the image sensor is located and the extension of the main plane $S_2$ of the camera lens intersects at a position with preset distance h from the side of the vehicle body, the intersection point (the intersection point is actually an intersection line) is $M_1$ in the figure. The preset included angle $\beta$ is in a range of 0.1-10 degrees, and the included angle and the preset distance h can be determined according to the model of the vehicle, the focal length of the lens of the vehicle-mounted camera system and the required field of view of the vehicle.

Also, the setting of the deflection angle is determined based on the target photographing plane, and the setting of the deflection angle may be such that the plane where the image sensor is located, the main plane of the photographing lens and the main plane of the target photographing area intersect in a straight line, or approximately intersect in a straight line. It should be noted that it is not that the larger the target area range that can be photographed is, the better, but that the required maximum clear field of view can be satisfied according to the requirements of the vehicle.

When the camera system in the present embodiment is mounted on a vehicle, it is mounted in a manner similar to that of Embodiment 1, only by satisfying the Scheimpflug principle so that the clear focal plane of the camera lens is located substantially on the side of the vehicle body and substantially parallel to the vehicle body.

Embodiment 3

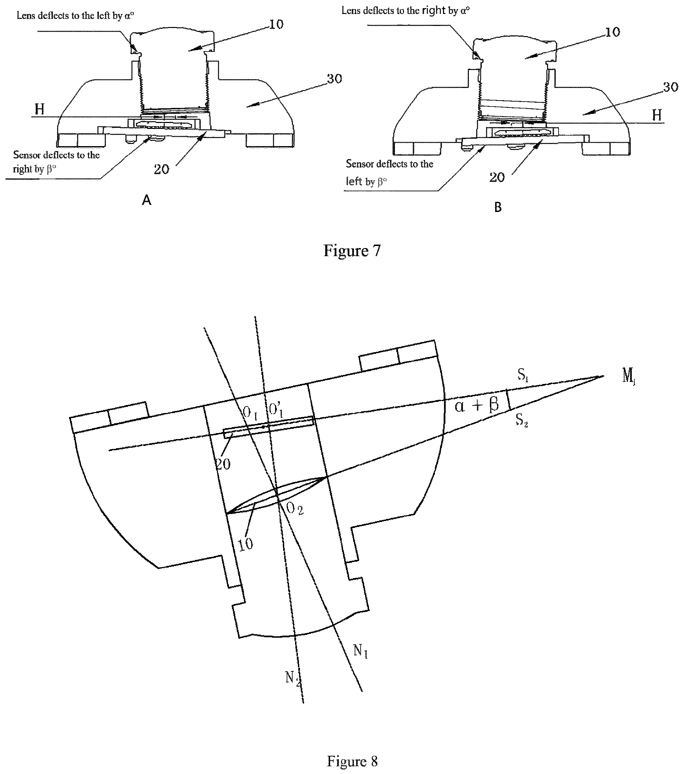

In the present embodiment, a combination of camera lens and sensor deflection and sensor translation is adopted, as shown in FIG. 7. Part A in FIG. 7 shows a condition of left deflection (angle) of the camera lens + right deflection (angle) of the sensor + left translation (position) of the sensor, where the main axis of the camera lens is deflected to the left with respect to the direction of the main axis of the camera, the deflection angle is $\alpha°$, the normal direction of the sensor is deflected to the right with respect to the direction of the main axis of the camera, the deflection angle is $\beta°$, and the sensor is translated/shifted to the left. With this deflection arrangement, the relative deflection angle between the sensor and the lens can be further enlarged.

Part B in FIG. 7 shows a condition of right deflection of the camera lens + left deflection of the sensor + right translation of the sensor, where the main axis of the camera lens deflects to the right with respect to the direction of the main axis of the camera by deflection angle of $\alpha°$, the normal direction of the sensor deflects to the left with respect to the direction of the main axis of the camera by deflection angle of $\beta°$, and the sensor is translated to the right by a distance of H.

FIG. 8 is a simplified and enlarged schematic diagram illustrating the camera system shown in A part of FIG. 7, it shows a view which is viewed after the system has been mounted on a vehicle. In the camera system, the camera lens deflects by $\alpha°$ to the left and the image sensor 20 deflects by $\beta°$ to the right, and the included angle formed by the two is $\alpha + \beta$. As shown in the figure, in the present embodiment, the whole of the image sensor 20 is translated by a vertical distance H, and in the figure, the center $O_1$ of the image sensor 20 is shifted to $O'_1$ following the lateral translation.

The translation distance of the sensor may vary depending on the change in imaging position caused by the deflection angle of the sensor and the camera. Preferably, the direction of translation of the sensor coincides with the direction of change of the imaging position (with respect to the non-deflecting case) due to the angle deflection of the camera lens and the sensor, i.e., when the imaging position, due to the angle deflection of the camera lens and the sensor, moves to the left, the sensor is set to translate to the left by substantially the same distance H; when the imaging position moves to the right due to the angle deflection of the camera lens and the sensor, the sensor is set to translate to the right by substantially the same distance H.

In the present embodiment and subsequent embodiments, the left-right offset of the sensor merely affects the received field of view, and therefore a person skilled in the art only needs to adjust according to the required field of view. The arrangement of the camera system is similar to that of Embodiment 1 and will not be described again.

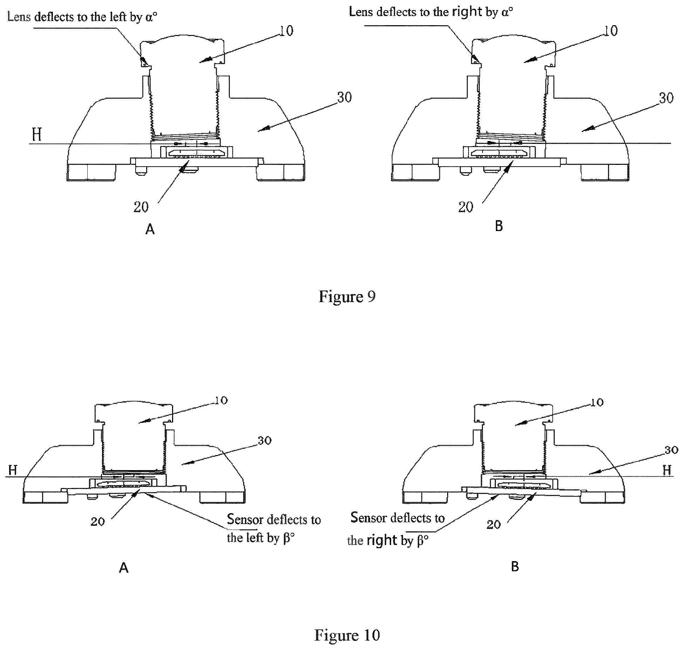

In addition to the above arrangements, the deflection and translation between the sensor and the lens can also take other different combinations, for example, View A in FIG. 9 shows a case where the camera lens deflects to the left and translates to the left, and View B shows a case where the camera lens deflects to the right and translates to the right; View A in FIG. 10 shows a case where the sensor is deflected to the left and translated to the left, and Part B shows a case where the sensor is deflected to the right and translated to the right. The two structural variations in FIGS. 9-10 can also achieve a photographic effect similar to that of the camera system in Embodiments 1-3, providing the photographing clarity of the target photographing area.

While the principles of the present application have been described in detail above with reference to preferred embodiments thereof, it should be understood by a person skilled in the art that the above-described embodiments are merely illustrative of exemplary implementations of the present application and are not intended to limit the scope of the present application. The details of the embodiments are not to be construed as limitations on the scope of the present application, and any obvious variations, such as equivalent alterations, simple substitutions and the like, based on the technical solution of the present application, fall within the scope of the present application without departing from the spirit and scope of the present application.

## Claims

1. A vehicle-mounted camera system, which is used for mounting on a target vehicle, and comprises an image acquisition unit and a camera lens, wherein the vehicle-mounted camera system is mounted on sides of the target vehicle, a preset included angle is formed between a plane where the image acquisition unit is located and a main plane of the camera lens, so that the plane where the image acquisition unit is located intersects with the main plane of the camera lens at a preset distance h from the side of a vehicle body; and the camera lens is focused behind the side of the target vehicle, with a horizontal distance between an object focal point F of the camera lens and the plane where the side of the target vehicle body is located equals to the preset distance or approaches the preset distance h.

2. The vehicle-mounted camera system according to claim 1, wherein the preset distance h satisfies the

$$h = h_1 + h_2 = h_1 + \frac{f}{\tan \alpha}$$

following formula:                    ,
wherein $h_1$ represents an extended distance of center of the camera lens from the side of the vehicle body of the target vehicle when the camera lens is mounted on the target vehicle, $h_2$ represents a distance from an intersection line of the plane where the image acquisition unit is located and the main plane of the camera lens to the center of the camera lens, and $f$ represents a focal length of the camera lens.

3. The vehicle-mounted camera system according to claim 2, wherein a longitudinal distance L from the object focal point F of the camera lens to the intersection line of the plane where the image acquisition unit is located and the main plane of the camera lens satisfies the following formula:

$$L = \frac{h_2}{\tan \alpha}.$$

4. The vehicle-mounted camera system according to claim 3, wherein the plane where the image acquisition unit is located and/or the main plane of the camera lens occurs angle deflection to the left or to the right with respect to a main axis of the vehicle-mounted camera system.

5. The vehicle-mounted camera system according to claim 3, wherein while a perpendicular line is drawn from a center of the camera lens to an intersection line of the plane where the image acquisition unit is located and the main plane of the camera lens, a height of an intersection point, at which the perpendicular line intersects with the intersection line, is equal to or lower than a height of the center of the camera lens, and a height of the object focal point of the camera lens on a side of the target vehicle is equal to or lower than the height of the intersection point of the perpendicular line and the intersection line.

6. The vehicle-mounted camera system according to claim 1, wherein a center of the image acquisition unit and/or an axial center of the camera lens is laterally translated in relative to the center of the vehicle-mounted camera system, and a translation distance is determined based on an image shifting caused by an included angle between the plane where the image acquisition unit is located and/or the main plane of the camera lens.

7. The vehicle-mounted camera system according to claim 6, wherein the vehicle-mounted camera system further comprises a housing in which a first mounting position for mounting the camera lens and a second mounting position for mounting the image acquisition unit are provided, at least one of the first mounting position and the second mounting position being offset with respect to a main axis of the vehicle-mounted camera system so that a deflection of a preset angle and/or translation of a preset distance occur after the camera lens and the image acquisition unit are fixed at respective positions.

8. The vehicle-mounted camera system according to claim 1, wherein the preset included angle is between 0.1 and 10 degrees.

9. The vehicle-mounted camera system according to claim 1, wherein the preset included angle is 1 degree, 2 degrees, 3 degrees, 5 degrees, or 7 degrees.

10. The vehicle-mounted camera system according to claim 1, wherein the vehicle-mounted camera system comprises a plurality of sets of imaging structures composed of the image acquisition unit, the camera lens and the housing, which are mounted on both sides of the vehicle and/or in the vehicle, respectively.

Figure1

A

B

Figure 2

$$L = \frac{h_2}{tg\,\alpha}$$

Figure 3

Figure 4

Figure 5

Figure 6

Figure 7

Figure 8

Lens deflects to the left by α°

10

30

H

20

A

Lens deflects to the right by α°

10

30

20

B

Figure 9

10

30

H

20

Sensor deflects to
the left by β°

A

10

30

H

Sensor deflects to
the right by β°

20

B

Figure 10

## INTERNATIONAL SEARCH REPORT

| | International application No. |
|---|---|
| | **PCT/CN2022/121534** |

**A.    CLASSIFICATION OF SUBJECT MATTER**

B60R 1/06(2006.01)i;    H04N 5/225(2006.01)i

According to International Patent Classification (IPC) or to both national classification and IPC

**B.    FIELDS SEARCHED**

Minimum documentation searched (classification system followed by classification symbols)

B60R; H04N

Documentation searched other than minimum documentation to the extent that such documents are included in the fields searched

Electronic data base consulted during the international search (name of data base and, where practicable, search terms used)

WPABSC; CNTXT; ENTXTC; CNABS: 沙姆定律, 后视镜, 平面, 交线, 交点, 夹角, 倾斜, 移轴, 焦距, 透镜, 传感器; WPABS; VEN; ENTXT; EPTXT: vehicle, camera, lens, sensor, axis, focus, angle, degree, optical, scheimpflug principle, pickup.

**C.    DOCUMENTS CONSIDERED TO BE RELEVANT**

| Category* | Citation of document, with indication, where appropriate, of the relevant passages | Relevant to claim No. |
|---|---|---|
| PX | CN 216833440 U (SHANGHAI KAIMU VISION TECHNOLOGY CO., LTD.) 28 June 2022 (2022-06-28)<br>entire document | 1-10 |
| X | CN 112995454 A (GM GLOBAL TECHNOLOGY OPERATIONS LLC.) 18 June 2021 (2021-06-18)<br>description, paragraphs 34-48 and 69-86, and figures 1-18 | 1-10 |
| X | JP 2001350168 A (TOYOTA CENTRAL RESEARCH & DEVELOPMENT LABORATORIES INC.) 21 December 2001 (2001-12-21)<br>description, paragraphs 19-54, and figures 1-11 | 1-10 |
| X | JP 2007065409 A (AISIN SEIKI CO., LTD.) 15 March 2007 (2007-03-15)<br>description, paragraphs 31-63, and figures 1-7 | 1-10 |
| A | JP 2016218044 A (ASMO CO., LTD.) 22 December 2016 (2016-12-22)<br>entire document | 1-10 |
| A | CN 113225473 A (ZHEJIANG DAHUA TECHNOLOGY CO., LTD.) 06 August 2021 (2021-08-06)<br>entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2022** | **28 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/121534**

**C.    DOCUMENTS CONSIDERED TO BE RELEVANT**

| Category* | Citation of document, with indication, where appropriate, of the relevant passages | Relevant to claim No. |
|---|---|---|
| A | CN 112311971 A (ZHEJIANG DAHUA TECHNOLOGY CO., LTD.) 02 February 2021 (2021-02-02)<br>    entire document | 1-10 |

Form PCT/ISA/210 (second sheet) (January 2015)

## INTERNATIONAL SEARCH REPORT
### Information on patent family members

International application No.

**PCT/CN2022/121534**

| Patent document cited in search report | | | Publication date (day/month/year) | Patent family member(s) | | | Publication date (day/month/year) |
|---|---|---|---|---|---|---|---|
| CN | 216833440 | U | 28 June 2022 | None | | | |
| CN | 112995454 | A | 18 June 2021 | US | 10965857 | B1 | 30 March 2021 |
| JP | 2001350168 | A | 21 December 2001 | None | | | |
| JP | 2007065409 | A | 15 March 2007 | None | | | |
| JP | 2016218044 | A | 22 December 2016 | WO | 2016185980 | A1 | 24 November 2016 |
| CN | 113225473 | A | 06 August 2021 | CN | 113225473 | B | 08 July 2022 |
| CN | 112311971 | A | 02 February 2021 | CN | 210075392 | U | 14 February 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202122360709